# EUROPEAN PATENT APPLICATION

(11) **EP 2 491 797 A1**
(43) Date of publication of application: **29.08.2012**
(21) Application number: 11155809.4
(22) Date of filing: 24.02.2011
(51) Int. Cl.: A23L 1/035, A23F 5/36, A23F 5/40

(54) **Coffee product**

(71) Applicant: Nestec S.A., 1800 Vevey (CH)
(72) Inventor: Rosse, Marcel, 2024, SAINT-AUBIN-SAUGES (CH); Joannet, Eric, 1110, Morges (CH); Celik, Nihan, Bursa (TR); Bahtiyar, Ozlem, Bursa (TR)
(74) Representative: Lomholt, Stig Bredsted

(57) **Abstract**

The present invention relates to a method for producing a coffee product useful for preparing a coffee beverage, especially a Turkish coffee beverage, comprising steam treatment of a mixture of roast and ground coffee and emulsifier.

## Description

### Field of the invention

The present invention relates to a coffee product useful for preparing a coffee beverage, especially Turkish coffee beverage.

### Background

Turkish coffee is a traditional coffee consumed in Turkey and the Middle East. It is normally produced by heating water at low heat and then adding roast and ground coffee which is left to brew for up to e.g. 20 minutes. Sugar is usually added. The coffee grounds are not separated from the beverage when served in the cup, and the grounds should form a sediment that remains in the cup when the coffee is drunk or poured from the cup. The remaining sediment is traditionally used for telling peoples fortune. It is important for the quality that the sediment has low flowability to remain in the cup. There is a desire for producing instant versions of Turkish coffee which can be prepared quickly eliminating the need for lengthy cooking. However, it has been found that without the lengthy cooking, the roast and ground coffee particles does not sediment in sufficient amount and the sediment does not have the desired low flowability that makes it stay in the cup when the coffee is drunk or poured from the cup. Additionally, roast and ground coffee particles tend to remain on the surface of hte beverage, so called "floaters", which gives an unattractive appearance different from a Turkish coffee produced in the traditional manner with lengthy brewing. There is thus still a need for improved instant Turkish coffee products.

### Summary of the invention

The inventors have found that mixing roast and ground coffee with emulsifier and treating the mixture with steam results in a coffee product useful for preparing Turkish coffee overcoming the problems mentioned above. Accordingly, the invention relates to a method for producing a coffee product, comprising a) roasting and grinding coffee beans; b) mixing the roast and ground coffee with an emulsifier; and c) treating the mixture of roast and ground coffee and emulsifier with steam.

In a further aspect, the invention relates to a coffee product comprising roast and ground coffee with an average particle size between 50 microns and 150 microns, and emulsifier in an amount of between 0.5% and 10% of the amount of roast and ground coffee.

### Detailed description of the invention

The present invention relates to coffee products and methods of producing coffee products. By coffee product is meant a product derived from roast and ground coffee beans, and suitable for the production of a coffee beverage. The coffee products are preferably instant coffee products. Hereby is meant coffee products from which a coffee beverage can be produced simply by adding a liquid, optionally followed by mixing, without any filtration or other separation being necessary. A coffee product is preferably a Turkish coffee product, preferably an instant Turkish coffee product, meaning a coffee product suitable for production of a Turkish coffee which contains roast and ground coffee particles giving a sediment in the cup when served.

According to the method of the present invention coffee beans are roast and ground. The coffee used may be of any variety, e.g. *robusta* or *arabica,* but is preferably *arabica.* Roasting of coffee beans is well known in the art and may be performed by any suitable method. The degree of roasting obtained depends on factors such as temperature and time of roasting and may e.g. be determined from the colour change of the beans as a result of the roasting process. The colour change can be expressed as the CTN value measured by the Neuhaus colour test (infrared reflectance expressed relative to a standard sample, Colortest II, Neuhaus Neotec, Reinbek, Germany). CTN value varies between 0 and 200, a low value indicating a high degree of roasting. In a preferred embodiment of the invention coffee beans are roasted to a CTN value of between 80 and 120, more preferably between 90 and 110.

The coffee roasted coffee beans are ground according to the invention, grinding of coffee beans is well known in the art and may be performed by any suitable method. The particle size of the ground coffee is important for obtaining the right properties of a coffee beverage prepared from the coffee product of the invention. If the particle size is too small, there is a tendency for so called "floaters" to appear when the coffee product is reconstituted by addition of liquid. Floaters are particles of coffee that are not sufficiently dispersed in the liquid and that float on the surface of the liquid beverage. The particle size is also important for the properties of the sediment remaining in the cup after the beverage has been consumed. In a Turkish coffee, an amount of sediment should stay in the bottom of the cup instead of being poured out when the last liquid is drunk or poured from the cup. Preferably the coffee beans are ground to an average size of between 50 microns and 150 microns, more preferably between 50 microns and 110 microns. By average size is meant the diameter where 50% of the particles (by volume) of the powder have a larger diameter, and the other 50% (by volume) have a smaller equivalent diameter, also called D₅₀.

The roast and ground coffee is mixed with an emulsifier. The emulsifier is important to eliminate or reduce the occurrence of floaters. The emulsifier may also reduce the uptake of water by the roast and ground coffee during steam treatment whereby the need for subsequent drying is reduced. The emulsifier may e.g. be lecithin, diacetyl tartaric acid ester of mono- and/or diglycerides, or other suitable food grade emulsifier. The emulsifier may e.g. mixed with the roast and ground coffee in an amount of emulsifier between 0.5% and 10% (weight/weight) of the amount of roast and ground coffee, preferably in an amount of emulsifier between 1% and 5% of the amount of roast and ground coffee. The roast and ground coffee may be mixed in any suitable way using conventional mixing equipment and at any suitable temperature, e.g. at ambient temperature.

The mixture of roast and ground coffee and emulsifier is treated with steam to ensure the proper texture of the sediment left in the cup after drinking a coffee beverage prepared from the coffee product of the invention. By treatment with steam is meant that the mixture of roast and ground coffee and emulsifier is brought into contact with steam. The steam treatment results in a suitable "sticky" texture of the sediment which makes a proper amount stay in the bottom of the cup when the liquid is drunk or poured from the cup. The steam treatment should be performed in a way ensuring a substantially homogenous treatment of the roast and ground coffee and emulsifier mix with steam. The temperature of steam used for treating the roast and ground coffee is preferably between 100°C and 180°C, more preferably between 105°C and 150°C. The roast and ground coffee and emulsifier mix will take up water as a result of the steam treatment. Preferably the steam treatment is performed so that the moisture of the mixture after treatment is between 3% and 60% (weight/weight), preferably between 5% and 50%. The steam treatment may be performed for between 1 second and 30 minutes. The treatment time may depend on the equipment used, e.g. equipment allowing very fast mixing of the roast and ground coffee and emulsifier mixture with steam may facilitate short treatment durations, whereas other equipment may require longer duration for proper mixing.

The steam treatment may e.g. be performed in the same mixing equipment wherein the roast and ground coffee and emulsifier is mixed, if this equipment is provided with means for introducing steam. The mixing may e.g. be performed in a conical mixer provided with means for introducing steam, e.g. by a valve at or near the bottom of the mixer, and means for mixing the roast and ground coffee and emulsifier mixture with steam. In this case the duration of steam treatment will normally be between 5 and 30 minutes, to ensure proper mixing of the roast and ground coffee and emulsifier mixture with the steam. The steam treatment may also be performed in equipment normally used for agglomeration of powders, wherein steam can be sprayed unto a falling curtain of the roast and ground coffee and emulsifier mixture. In this case the treatment duration may be short, e.g. between 1 and 10 seconds. The roast and ground coffee and emulsifier mixture is preferably not prewetted before the steam treatment.

The method of the invention may further comprise drying the steam treated mixture of roast and ground coffee and emulsifier, e.g. to improve the shelf life as high water content generally shortens the shelf life of the product. Drying may be performed by any suitable method known in the art, e.g. by oven drying, freeze drying, or vacuum drying. Drying may e.g. per performed to reach a final humidity level in the product of between 1% and 10%, preferably between 2% and 5%.

The method of the invention may further comprise mixing the steam treated mixture of roast and ground coffee and emulsifier with soluble coffee. By soluble coffee is meant a dried powder of soluble coffee solids obtained by extracting coffee beans with an aqueous liquid, and drying the extract. Methods for producing soluble coffee are well known in the art. If a drying step is performed after the steam treatment, mixing with soluble coffee normally takes place after the drying step. By adding soluble coffee to the product, the coffee taste and aroma may be improved, and the balance between taste and aroma strength and amount of sediment may be regulated to achieve the desired result. If foam, or crema, is desired in a beverage prepared from the product of the invention, a foaming soluble coffee product may be used. A foaming soluble coffee product is a soluble coffee product that creates foam, or crema, on top of the liquid when dissolved. A foaming soluble coffee product may e.g. be produced by injection of gas, e.g. nitrogen, into a coffee extract before or during drying, e.g. as disclosed in WO 2009/040249 (Nestec S.A.). Foaming soluble coffee powders may further be produced as disclosed in WO 2009/059938 (Nestec S.A.) or WO 2009/080596 (Nestec S.A.). Soluble coffee is preferably added in an amount of between 3% and 300% of the amount of roast and ground coffee, such as between 50% and 200% (weight/weight) of the amount of roast and ground coffee.

In a further embodiment, the method of the invention comprises mixing the steam treated mixture of roast and ground coffee and emulsifier with sugar. If a drying step is performed after the steam treatment, mixing with sugar normally takes place after the drying step. If both soluble coffee and sugar is mixed with the steam treated mixture of roast and ground coffee and emulsifier, sugar may be mixed with the steam treated mixture of roast and ground coffee and emulsifier, before, after, or simultaneously with soluble coffee. If sugar is added, it preferably accounts for between 5% and 60% (weight/weight) of the total mixture.

In a further aspect, the invention relates to a product obtainable by the method of the invention. A product of the invention preferably comprises roast and ground coffee with an average particle size between 50 microns and 150 microns, preferably between 50 microns and 110 microns, and emulsifier in an amount of between 0.5% and 10% of the amount of roast and ground coffee. In one embodiment a product of the invention comprises emulsifier in an amount of between 1% and 5% of the amount of roast and ground coffee. The emulsifier can be any emulsifier, as specified above. A coffee product of the invention may further comprise soluble coffee in an amount of between 3% and 300% (weight/weight) of the amount of roast and ground coffee, such as between 50% and 200%. Soluble coffee may e.g. be a foaming soluble coffee as described above. A coffee product of the invention may also comprise sugar, e.g. between 5% and 60% (weight/weight) sugar, such as between 10% and 50%.

### EXAMPLES

### Evaluation of sediment and "floaters"

A coffee product was poured into a cup and 60-65 ml of hot water (85-95C) was poured into the cup. The coffee product and water was mixed by stirring with a flat spoon five times in clockwise direction and five times in counter-clockwise direction. The amount of floaters were analysed by entering a flat spoon into the beverage and gently pulling it out with the flat surface of the spoon facing the surface of the beverage. The amount of roast and ground coffee particles staying on the spoon was evaluated. 3-5 minutes after pouring hot water into the cup, the liquid was gently poured out, and the amount of the remaining sediment was analysed.

### Example 1

Roasted coffee beans were ground to a D₅₀ of 90 micron and was treated with hot water at 70°C and was sieved to obtain 4 samples with different particles size:
a) <20 micron
b) <50 micron
c) 50-150 micron
d) > 150 micron

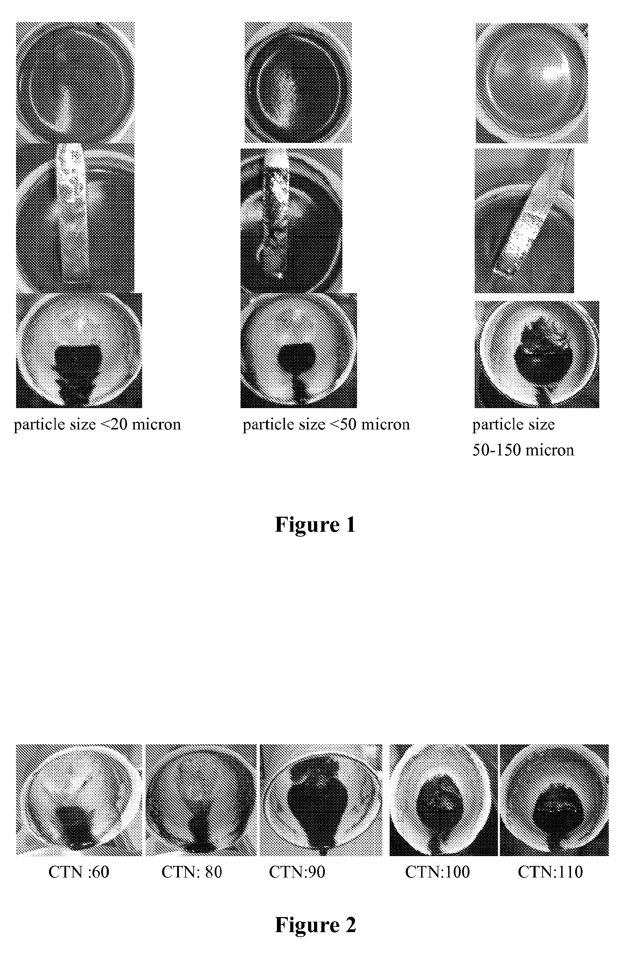

The roast and ground coffee was treated in a chamber with a relative humidity of 60%RH and a temperature of 70°C for 10 minutes. After the water treatment roast and ground coffee was dried in an oven at 100°C during for 2 hours to a moisture degree of <3%. Sediment and floaters was evaluated as described above. It was found that the sample with a particle size between 50-150 microns with a moisture content before drying of 30-40% before drying had the desired sticky texture and appropriate quantity of sediment than the three other samples. Results are given below and illustrated in Figure 1.

| Particle size | Moisture before drying (%) | Sediment | Floaters | |
|---|---|---|---|---|
| 50-150 micron | 5% | No sediment | Yes | |
| 50-150 micron | 10% | Grindy | Yes | |
| 50-150 micron | 20% | Grindy | Some | |
| 50-150 micron | 30% | Sticky | Some | |
| 50-150 micron | 40% | Sticky | No | |
| <20 micron | 30% | No sediment | No | |
| <50 micron | 30% | No sediment | Yes | |
| >150 micron | 30% | Granular | Yes | |

### Example 2

Coffee beans were roasted to 5 different degrees of roasting, CTN values of 60, 80, 90, 100, and 110, respectively, and ground to a particle size of D₅₀ of 90 micron. The roast and ground coffee was treated in a chamber with a relative humidity of 60%RH and a temperature of 70°C for 10 minutes. After the water treatment the roast and ground coffee was dried by oven at 100°C during 2 hours to a moisture degree of <3%. Sediment and floaters was evaluated as described above. It was found that the amount of sediment was highest with the highest CTN value and floaters quantity were the lowest with the highest CTN. Results are shown in Figure 2.

### Example 3

Batches of roast and ground coffee having particle size of 50-150 micron with a CTN of 98-110 was mixed with either 2.5% lecithin or diacetyl tartaric acid ester of monoglycerides (DATEM) and steam treated in an agglomeration tower at a rate of 20 kg/h of treated roast and ground by introducing steam with a temperature of 110-145°C at a rate of 100 kg/h. After the steam treatment, the roast and ground coffee and emulsifier mixture was dried by hot air in a fluidized bed to a moisture degree of <4%. Sediment and floaters was evaluated as described above. A control sample without emulsifier was produced. The results are given below.

| Sample | R&G (kg/h) | Steam temperature (°C) | Steam rate (kg/h) | Sediment (comments) | Emulsifier | Floaters (comments) |
|---|---|---|---|---|---|---|
| 1 | 20 | 110 | 100 | Grindy | No | Yes |
| 2 | 20 | 110 | 100 | Sticky | DATEM | No floaters |
| 3 | 20 | 145 | 100 | Grindy | DATEM | No floaters |
| 4 | 20 | 110 | 100 | Sticky | Lecithin | No floaters |
| 5 | 20 | 145 | 100 | Grindy | Lecithin | No floaters |

### Example 4

Batches of roast and ground coffee with a D₅₀ of 90 micron was mixed with either lecithin or diacetyl tartaric acid ester of monoglycerides (DATEM) and steam treated in a conical mixer by introducing steam with a temperature of 108°C at a rate of 20- 80 kg/h for 5-15 minutes while mixing steam and roast and ground coffee and emulsifier mixture. After mixing the steam treated roast and ground coffee and emulsifier mixture was dried by vacuum to a moisture level of <4%. Sediment and floaters was evaluated as described above. The results are given below.

| Sample | Lecithin (%) | DATEM (%) | Steam (kg/h) | Steam Application time | Sediment (comments) | Floaters (comments) |
|---|---|---|---|---|---|---|
| 1 | 0 | 0 | 80 | 15 minutes | Sticky | With floaters |
| 2 | 2.5 | 0 | 80 | 15 minutes | Sticky | No floaters |
| 3 | 0 | 2.5 | 80 | 15 minutes | Sticky | No floaters |
| 4 | 1.25 | 0 | 80 | 5 minutes | Sticky | Few floaters |
| 5 | 2.5 | 0 | 40 | 5 minutes | Sticky | No floaters |
| 6 | 2.5 | 0 | 20 | 5 minutes | Grindy | No floaters |

### Example 5

A batch of roast and ground coffee with a D₅₀ of 90 micron was mixed with emulsifier and steam treated in a conical mixer by introducing steam with a temperature of 108°C at a rate of 80 kg/h for 15 minutes while mixing steam and roast and ground coffee and emulsifier mixture. After treatment the steam treated roast and ground coffee and emulsifier mixture was dried by oven drying to a moisture level of <4%. A batch of the same roast and ground coffee was treated in the same way, except no steam treatment or oven drying was performed. Sediment and floaters was evaluated as described above. The results are given below.

| Sample (30 kg/batch) | emulsifier | Steam (kg/h) | Moisture before drying (%) | Sediment | Floaters |
|---|---|---|---|---|---|
| 1 | 2,5 % | 0 | 3% | Grindy | With floaters |
| 2 | 2.5 % | 80 | 11.74 | Sticky | No floaters |

## Claims

1. A method for producing a coffee product, comprising:
a) roasting and grinding coffee beans;
b) mixing the roast and ground coffee with an emulsifier; and
c) treating the mixture of roast and ground coffee and emulsifier with steam.

2. The method of claim 1 wherein the mixture of roast and ground coffee and emulsifier is dried after the treatment with steam.

3. The method of claim 1 or 2 wherein the mixture of roast and ground coffee and emulsifier is mixed with soluble coffee and/or sugar after the treatment with steam and optional drying.

4. The method of any of the preceding claims wherein the coffee beans are roasted to a CTN value of between 80 and 120.

5. The method of any of the preceding claims wherein the roasted coffee beans are ground to an average particle size of between 50 microns and 150 microns.

6. The method of any of the preceding claims wherein the steam treatment in step c) is carried out with steam at a temperature of between 100°C and 180°C.

7. The method of any of the preceding claims wherein the steam treatment in step c) is carried out for between 1 second and 30 minutes.

8. The method of any of the preceding claims wherein the steam treatment in step c) is carried out so that the moisture content of the treated mixture is between 3% and 60% after treatment.

9. A coffee product obtainable by the method of the invention.

10. A coffee product comprising roast and ground coffee with an average particle size between 50 microns and 150 microns, and emulsifier in an amount of between 0.5% and 10% of the amount of roast and ground coffee.

11. The coffee product of claim 10 comprising emulsifier in an amount of between 1% and 5% of the amount of roast and ground coffee.

12. The coffee product claim of 10 or 11 further comprising soluble coffee in an amount of between 3% and 300% of the amount of roast and ground coffee.

13. The coffee product of any of claims 10-12 further comprising between 5% and 60% sugar.
